# EUROPEAN PATENT APPLICATION

(11) **EP 1 850 206 A2**
(43) Date of publication of application: **31.10.2007**
(21) Application number: 07105565.1
(22) Date of filing: 03.04.2007
(51) Int. Cl.: G06F 1/18

(54) **Host unit case with foldable upper and lower covers for a computer**

(30) Priority: 25.04.2006 CN 200610074893
(71) Applicant: AOPEN INC., Hsichih Taipei Hsien (TW)
(72) Inventor: Cheng, Sheng-Hsiung, 221, Taipei Hsien (TW); Lin, Te-An, 221, Taipei Hsien (TW); Wang, Wu-Nan, 221, Taipei Hsien (TW); Huang, Chia-Chia, 221, Taipei Hsien (TW)
(74) Representative: Viering, Jentschura & Partner

(57) **Abstract**

A host unit case with upper and lower covers for a computer includes an upper cover and a lower cover and each of the covers is composed of two plate members pivotally connecting with each other. A first wall and a second wall each have the upper and lower ends thereof pivotally connecting with one of the plate members available for all parts being folded easily to reduce volume of the packaged host unit case. When the packaged host unit case is unfolded, the upper and lower ends of the first wall are joined to the first ends of the upper and lower covers respectively and the upper and lower ends of the second wall are joined to the second ends of the upper and lower covers respectively such that the host unit case is set up completely conveniently and quickly.

## Description

### BACKGROUND OF THE INVENTION

### 1.Field of the Invention:

The present invention is related to a host unit case of a personal computer and particularly to a built-up type host unit case of a computer.

### 2. Brief description of related art:

The host unit case is employed to receive electronic devices such as a main board, hard disks, optical disk drives, floppy disk drives and power supply device. Usually, the host unit case is set up with an unchangeable structure. The composite type host unit case has prior art such as US 6,961,236 and Taiwan Utility model publication No. M258544. US 6,961,236 discloses a computer chassis and Taiwan Utility model publication No. M258544 discloses a host unit case to meet specifications of ATX and BTX.

Following prior art which is belonged to a further type for the host unit case is made available for being disassembled into several parts before being set up as the host unit case. Taiwan Patent Publication No. 468811 discloses a host unit case for an industrial computer. Taiwan Patent Publication No. 474423 discloses a computer chassis free from aid of hand tools. Taiwan Patent Publication No. 490120 discloses a composite type computer chassis. Taiwan Patent Publication No. 531142 discloses a composite type computer chassis assembly.

Further, the computer chassis free from aid of hand tools disclosed in Taiwan Patent Publication No. 474423 provides the front and rear cover plates, which are pivotally joined to a bottom plate with head pins, two frame plates for a big floppy disk drive, which are pivotally joined to the front and rear cover plates, and a cover plate for a small floppy disk drive is assembled to a frame plate and is fixedly hung to the bottom of frame plate for the big floppy disk drive. Further, four L shaped plates are fixed at four corners of the bottom plate to be joined to the two cover plates firmly. Finally, two lateral cover plates are hooked to the lateral sides of the preceding structure and fastened with set screws after the main board and the power supply frame being mounted to the preceding structure to complete the whole assembly of the computer chassis. The parts of the computer chassis are packaged separately such that less space is required for storage.

However, parts of the preceding prior art are so many and divided into several part groups and it is inconvenient to pick right parts during setting up the computer chassis such that it is hard to gather the parts before assembling and it takes a lot of time set up the computer chassis.

### SUMMARY OF THE INVENTION

Therefore, the invention is proposed in order for a host unit case for a computer to be folded and set up more conveniently.

The primary object is to provide a host unit case with upper and lower covers for a computer with which the host unit case can be completely set up easily and quickly to enhance fun while the host unit case being set up by the user.

Another object is to provide a host unit case with upper and lower covers for a computer with which the parts can be gathered together and reduced in a small volume while packaging for reducing delivery cost and saving storage space.

Accordingly, a host unit case with foldable upper and lower covers for a computer according to the present invention is capable of being reduced volume thereof while packaging and being completely set up conveniently and quickly and comprises:
an upper cover, providing a first plate member and a second plate member pivotally connecting with the first plate member;
a lower cover, providing a third plate member and a fourth plate member pivotally connecting with the third plate member;
a first wall, the upper end thereof pivotally connecting with the first plate member and the lower end thereof pivotally connecting with the third plate member; and
a second wall, the upper end thereof pivotally connecting with the second plate member and the lower end thereof pivotally connecting with the fourth plate member;
wherein, the upper and lower ends of the first wall are joined to a first end of the upper cover and a first end of the lower cover and the upper and lower ends of the second wall are joined to a second end of the upper cover and a second end of the lower cover in case of the preceding parts being extended to allow the host unit case being completely set up conveniently and quickly. Thus, the host unit case can be reduced the volume thereof while packaging.

### BRIEF DESCRIPTION OF THE DRAWINGS

The present invention can be more fully understood by reference to the following description and accompanying drawings, in which:

Fig. 1A is a perspective view of the first embodiment of a host unit case with upper and lower covers for a computer according to the present invention;

Fig. 1B is a perspective view of the first embodiment of the host unit case shown in Fig. 1A associated with an upper case member;

Fig. 2 is a perspective view illustrating the first embodiment of the host unit case of the invention in a state of the first wall and the second wall being close to each other;

Fig. 3A, 3B and 3C are side elevational view illustrating steps to unfold the host unit case for separating the first and second walls apart in the first embodiment;

Fig. 4 is a perspective view of the second embodiment of the host unit case of the invention illustrating an upper case member being apart from rest parts of the host unit case;

Fig. 5 is a perspective view of the second wall and a first support member of the second embodiment of the host unit case according to the present invention;

Fig. 6 is a perspective view of the second embodiment of the host unit case according to the present invention;

Fig. 7 is a perspective view illustrating a second support plate of the second embodiment in a state of being folded;

Fig. 8 is a perspective view illustrating the second embodiment of the host unit case of the invention in a state of the first wall and the second wall being close to each other;

Figs. 9A, 9B and 9C are side elevational view illustrating steps to unfold the second embodiment of the host unit case for separating the first and second walls apart; and

Fig. 10 is a perspective view of another embodiment of the first support member.

### DETAILED DESCRIPTION OF THE INVENTION

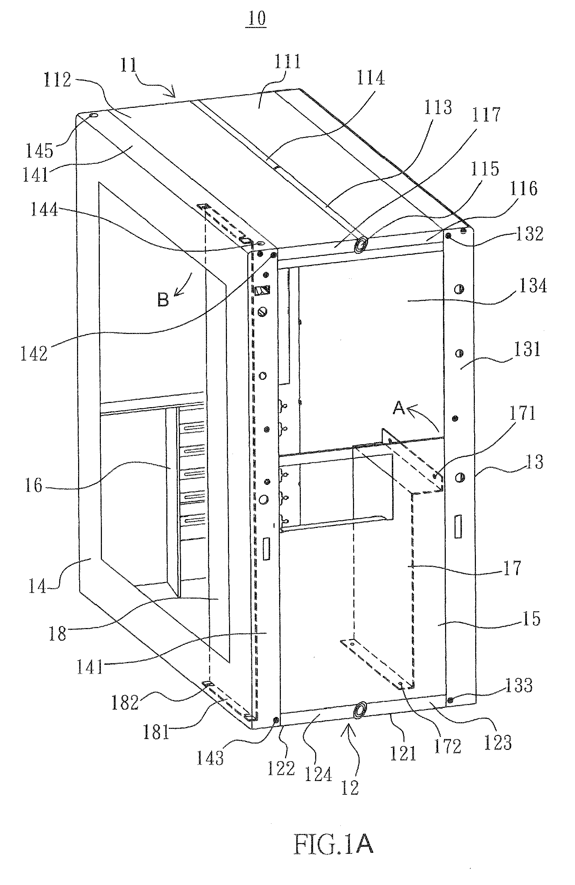

Referring to Fig. 1A, the first embodiment of a host unit case with foldable upper and lower covers according to the present invention is capable of being reduced volume thereof for packaging. The host unit case 10 includes an upper cover 11 and a lower cover 12. The upper cover 11 is composed of a first plate member 111 and a second plate member 112, which pivotally connect with each other in a way of a fitting part 113, 114 being alternately disposed at the joining sides of the first plate member 111 and second plate member 112 and a pivot rod 115 passing through fitting holes of the fitting parts 113, 1 14. Alternatively, a conventional hinge is joined to the first plate member 111 and the second plate member 112 in a way of two hinge ends being fixed to the joining sides of the first plate member 111 and the second plate member 112 respectively or in a way of two pivotal parts of the conventional hinge being located at a state of extended position and capable of being turned by means of an exerted force. The first and second plate members 111, 112 each provide a margin frame 116, 117 available for the pivotal structure respectively. The lower cover 12 is composed of a third plate member 121 and a fourth plate member 122. The third plate member 121 is pivotally joined to the fourth plate member 122 and the structure of the pivotal connection between the third and fourth plate members 121, 122 is the same as that between the first and second plate members 111, 112 and no details will be described further. A margin frame 123, 124 is provided to enclose the third and fourth plate members 121, 122 respectively available for mounting pivotal structure. A first wall 13 has a margin frame 131 corresponding to the margin frame 116 of the first plate member 111 and the margin frame 123 of the third plate member 121. The margin frame 131 of the first wall 13 presses against outer sides of the margin frame 116 (at the first end) of the first plate member 111 and the margin frame 123 (at the first end) of the third plate member 121. The adjacent margin frames 131, 116 and the adjacent margin frames 131, 123 have pivotal holes accommodating pivotal shafts 132, 133 respectively such that the first plate member 111 and the third plate member 121 pivotally connect with the upper end and the lower end of the first wall 13. A second wall 14 has a margin frame 141 corresponding to the margin frame 117 (at the second end) of the second plate member 112 and the margin frame 124 (the second end) of the fourth plate member 122. The margin frame 141 of the second wall 14 presses against outer lateral sides of the margin frame 117 and the margin frame 124. The adjacent margin frames 141, 117 and the adjacent margin frames 141, 124 have pivotal holes accommodating pivotal shafts 142, 143 respectively such that the second plate member 112 and the fourth plate member 122 pivotally connect with the upper end and the lower end of the second wall 14.

A third wall 15 has a margin frame corresponding to the margin frame 141 at the first end of the second wall 14. The margin frame at the first end of the third wall 15 is disposed at the inner side of margin frame 141. The margin frame of the third wall 15 and margin frame 141 at the first end of the second wall 14 provides pivotal holes respectively for accommodating a pivotal shaft 144 such that the first end of the third wall 15 can pivotally connect with the first end of the second wall 14. The second end of the third wall 15 is joined to the first end of the first wall 13 with screw fastening or catching to each other. The first end of the third wall 15 can pivotally connect with the first end of first wall 13. A fourth wall 16 has a margin frame corresponding to the margin frame 141 at the second end of the second wall 14. The margin frame of the fourth wall 16 is disposed at the inner side of margin frame 141 at the second end of the second wall 14. The margin frame of the fourth wall 16 and margin frame 141 at the second end of the second wall 14 provides pivotal holes respectively for accommodating a pivotal shaft 145 such that the fourth wall 16 can pivotally connect with the second end of the second wall 14. The fourth wall 16 can pivotally connect with the second end of first wall 13.

The first embodiment further includes a first support member 17 and a second support member 18. The first support member 17 has fixing holes 171 at top thereof corresponding to fixing holes at the plate body 134 of the first wall 13 such that the first support member 17 can be joined to the plate body 134 with screws engaging with the fixing holes. The bottom of the first support member 17 has fixing holes 172 corresponding fixing holes at the third plate member 121 such that the bottom of the first support member 17 can be joined to the third plate member 121 with screws passing through the fixing holes. The second support member 18 provides a plate body 181 at the top and the bottom thereof respectively corresponding to margin frame 141 at the first end of second wall 14. The plate body 181 has a elongated slot 182 at the top and the bottom thereof corresponding to fixing holes at the margin frame 141 of the second wall 14 respectively such that the second support member 18 is joined to the second wall 14 with screws passing through the fixing holes and the elongated slots 182 are available for adjusting space between the second support member 18 and the plate member 134 of the first wall 13. The space between the plate member 134 and the second support member 18 is larger enough to accommodate the first electronic device such as 5.25" floppy drive. The space between the first support member 17 and the second support member 18 is smaller so as to accommodate the second electronic device such as 3.25" floppy drive.

The first wall 13 and second wall 14 are the first lateral wall and the second lateral wall and the third wall 15 and fourth wall 16 are the front wall and the rear wall in the first embodiment.

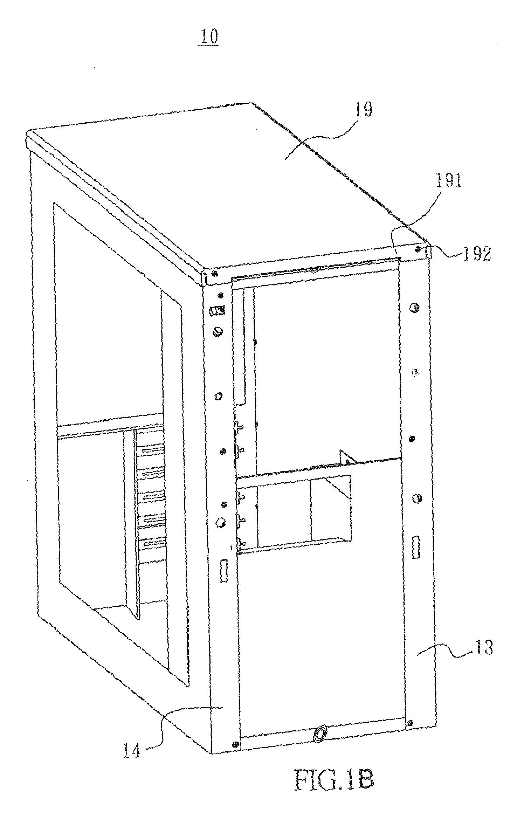

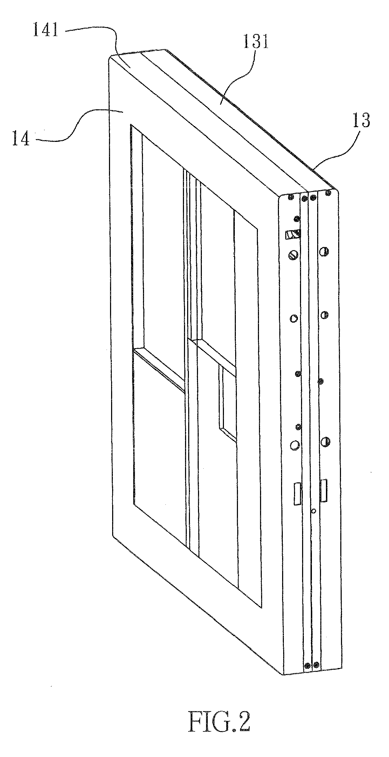

Referring to Figs. 1A and 2, when the host unit case of the first embodiment is folded, the first and second support members 17, 18 are detached first. Next, the third wall 15 and the fourth wall 16 close to an end of the first wall 13 are moved toward the second wall 14 as arrows A and B of Fig. 1 shows. Then, the first wall 13 and the second wall 14 are moved to be close to each other for the pivotal fitting parts of the first and second plate members 111, 112 moving downward and the pivotal fitting parts of the third and fourth plate members 121, 122 moving upward such that the first and third plate members 111, 121 moves to be close to the first wall 13, the second and fourth plate members 112, 122 moves to be close to the second wall 14 in a way of the margin frame 131 of the first wall 13 and the margin frame 141 of the second wall 14 being disposed against each other as shown in Fig. 2. In this way, space occupied by the folded host unit case is reduced significantly.

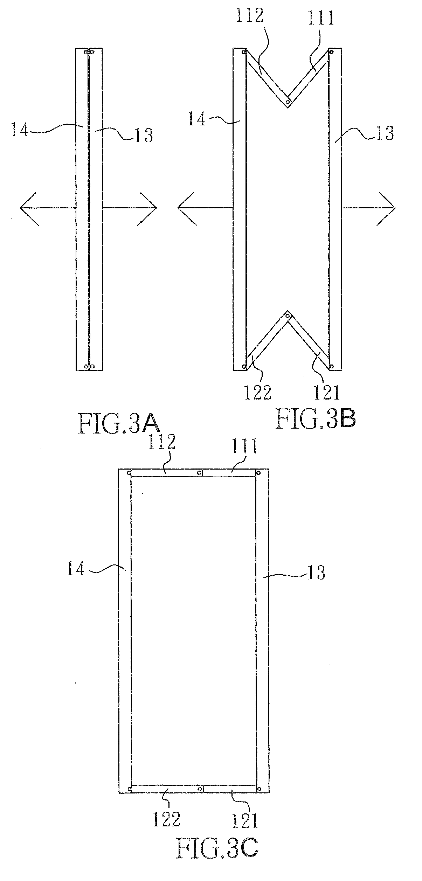

Referring to Figs. 2, 3A, 3B and 3C, when the host unit case of the present embodiment is unfolded, the first wall 13 and the second wall 14 are moved outward first as shown in Fig. 3A to extend the pivotal joints between the first plate member 111 and the second plate member 112 and the pivotal joints between the third plate member 121 and the fourth plate member 122 gradually as shown in Fig. 3B till being fully unfolded as shown in Fig. 3C. Further, the third wall 15 and the fourth wall 16 are extended and the first and the second support members 17, 18 are mounted to form the complete host unit case conveniently and quickly.

Referring to Figs. 1A and 1B, the present embodiment of the host unit case according to the present invention further includes a top case member 19, which has margin frames 191 extending downward with fixing holes 192 corresponding to fixing holes at the first wall 13 and the second wall 14 respectively such that the top case member can be joined to the first wall 13 and the second wall 14 with screws passing through the fixing holes 192.

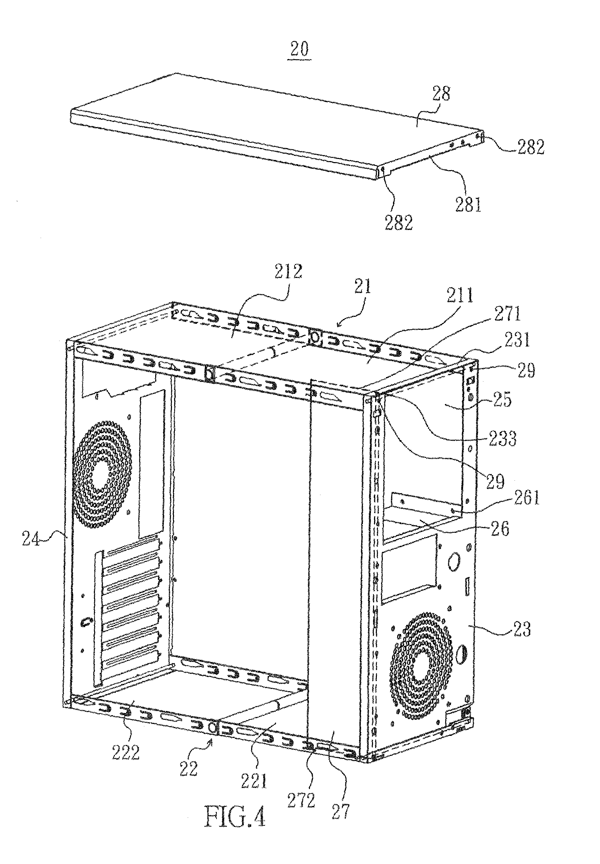

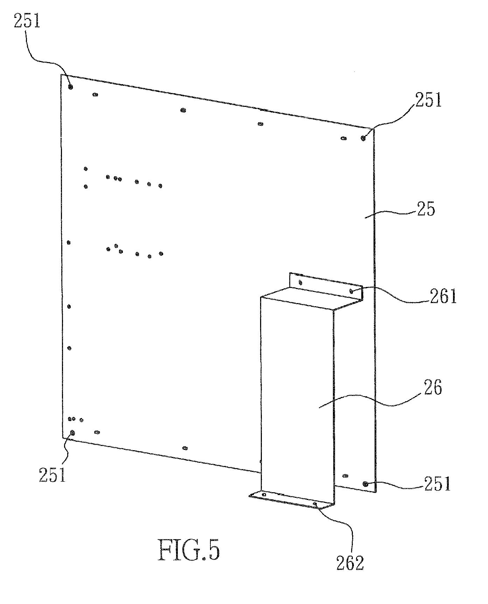

Referring to Figs. 4 and 5, the second embodiment of the host unit case with foldable upper and lower covers for a computer according to the present invention is illustrated. The host unit case 20 includes an upper cover 21 and a lower cover 22, a first wall 23 and a second wall 24. The upper cover 21 is composed of a first plate member 211 and a second plate member 212, which pivotally connect with each other in a way of almost the same as the pivotal structure between the first plate member 111 and the second plate member 112 of the first embodiment. No detail will be described further. The lower cover 22 is composed of a third plate member 221 and a fourth plate member 222, which pivotally connect with each other in a way almost the same as the pivotal structure between the first plate member 111 and the second plate member 112 of the first embodiment. No detail will be described further too. The upper and lower ends of the first wall 23 pivotally connect with the first plate member 211 of the upper cover 21 and the third plate member 221 of the lower cover 22 respectively and the upper and lower ends of the second wall 24 pivotally connect with the second plate member 212 of the upper cover 21 and the fourth plate member 222 of the lower cover 22 respectively in a way almost the same as pivotal structure of the first wall 13 and the second wall 14 being joined to the upper cover 11 and the lower cover 12. No detail will be described further.

Referring to Fig. 5, a third wall 25 is provided in the second embodiment and has fixing holes 251 corresponding to the fixing holes at the margin frames of the first wall 23 and the second wall 24 respectively such that the third wall 25 is joined to the first wall 23 and the second wall 24 with screws passing through the fixing holes.

The second embodiment further includes a first support member 26 and a second support member 27. The first support member 26 has fixing holes 261 at the top corresponding to fixing holes at the third wall 25 such that the first support member 26 can be joined to the third wall 25 with screws passing through the fixing holes. The bottom of the first support member 26 has fixing holes 262 corresponding to fixing holes at the third plate member 221 of the lower cover 22 such that the bottom of the first support member 26 can be joined to the third plate member 221 with screws passing through the fixing holes. The top and bottom of the second support member 27 have a plate body 271 respectively corresponding to margin frame 231 at the upper and lower ends of the first wall 23. The plate bodies 271 at the first end of the second support member 27 are disposed at the inner side of the margin frame 231 respectively. The margin frame 231 and the plate body 271 have pivotal holes corresponding to each other such that the first end of the second support member 27 pivotally connects with the first wall 23 with a shaft 233 passing through the pivotal holes. The plate body 271 at the bottom of second support member 27 and the third plate member 221 of the lower cover 22 provide fixing holes 272 respectively such that the bottom of the second support member 27 is joined to the lower cover 22 with screws passing through the fixing holes 272. The space between the third wall 23 and the second support member 27 is larger enough to accommodate a 5.25" floppy drive. The space between the first support member 26 and the second support member 27 is smaller and available for accommodating a 3.25" floppy drive. An upper case member 28 has a margin frame 281 extending downward and the margin frame 281 has fixing holes 282, 29 corresponding to fixing holes at the first wall 23 and the second wall 24 such that the upper case member 28 is joined to the first wall 23 and the second wall 24 respectively with screws passing through the fixing holes 282, 29.

The first wall 23 and the second wall 24 are the front wall and the rear wall respectively. The third wall 25 is a lateral wall for being joined to the main board.

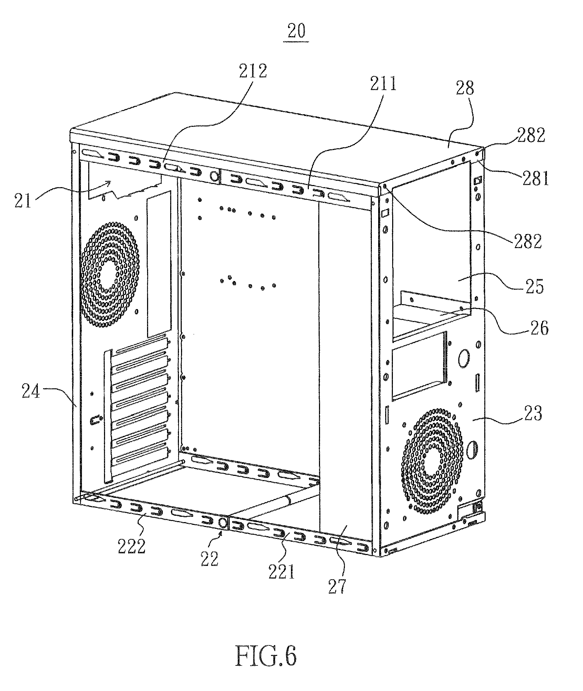

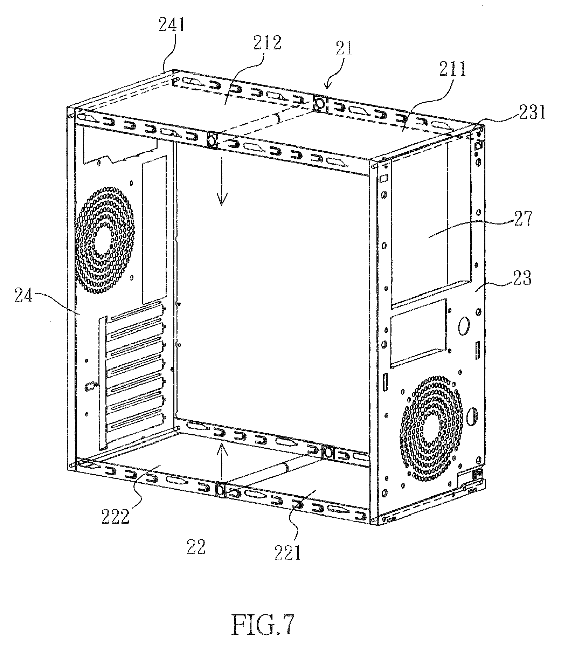

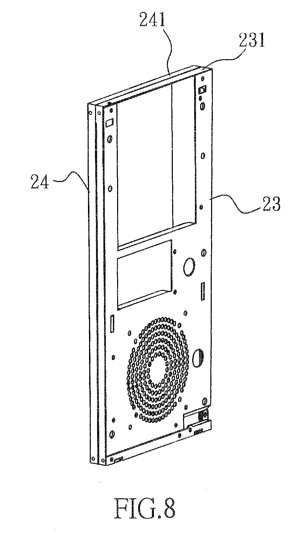

Referring to Figs. 4, 6 and 7, when the host unit case of the second embodiment is folded, the upper case member 28, the third wall 25 and the first support member 26 are detached first. Next, the second end of the second support member 27 is moved toward the first wall 23. Then, the first wall 23 and the second wall 24 are moved to close to each other for the pivotal fitting parts of the first and second plate members 211, 212 moving downward and the pivotal fitting parts of the third and fourth plate members 221, 222 moving upward as shown in Fig. 7 such that the first and third plate members 211, 221 move close to the first wall 23, the second and fourth plate members 212, 222 move close to the second wall 24 and the margin frame 231 of the first wall 23 and the margin frame 241 of the second wall 24 are disposed against each other as shown in Fig. 8. In this way, space occupied by the folded host unit case is reduced significantly.

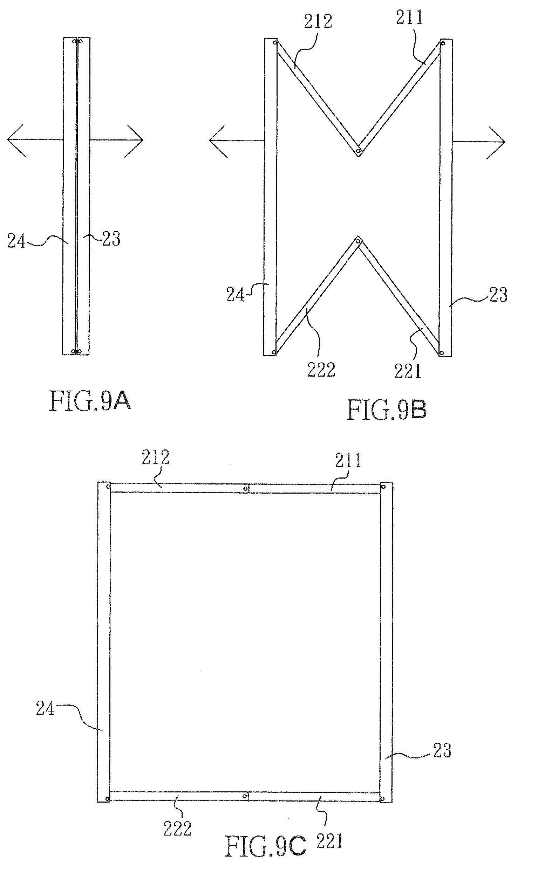

Referring to Figs. 4, 9A, 9B and 9C, when the host unit case of the present embodiment is unfolded, the first wall 23 and the second wall 24 are moved outward first as shown in Fig. 9A. Next, the pivotal joints between the first plate member 211 and the second plate member 212 and the pivotal joints between the third plate member 221 and the fourth plate member 222 are extended gradually as shown in Fig. 9B till being fully unfolded as shown in Fig. 9C. Then, the second support member 27 is lifted and the third wall 25 and the first support member 16 are mounted. Finally, the upper case member 28 is fixedly joined to the first wall 23 and the second wall 24 respectively to form the complete host unit case 20 conveniently and quickly.

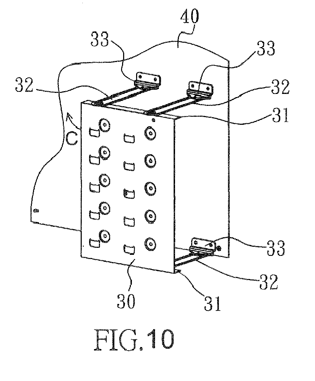

Referring to Fig. 10, another embodiment of the first support member 30 is illustrated. The top and bottom of first support member 30 have a horizontally bent shaped plate body 31 respectively. The respective plate body 31 is pivotally connected to an end of a connecting rod 32 corresponding to the respective plate body 31. Another end of the respective connecting rod 32 is pivotally connected to a corresponding lug 33 and the lug 33 is joined to the third wall 40. The plate body 31 at the bottom of the first support member 30 has fixing holes corresponding to the fixing holes at the third plate member of the lower cover such that the bottom of the first support member 30 is joined to the third plate member with screws passing through the corresponding fixing holes. When the first support member 30 is going to be removed during folding the host unit case, the bottom of the first support member 30 is detached from the third plate member first and then moved toward direction of arrow C shown in Fig. 10 to lean on the third wall 40.

It is appreciated that the host unit case with foldable upper and lower covers for a computer according to the present invention is capable of being set up a complete host unit case easily and quickly to enhance fun with self setting up the host unit case and be favorable for decreasing delivery cost and saving available storage space.

While the invention has been described with referencing to preferred embodiment thereof, it is to be understood that modi fications or variations may be easily made without departing from the spirit of this invention, which is defined by the appended claims.

## Claims

1. A host unit case with foldable upper and lower covers for a computer, which is capable of being reduced volume thereof while packaging and being completely set up conveniently and quickly, comprising:
an upper cover, providing a first plate member and a second plate member pivotally connecting with the first plate member;
a lower cover, providing a third plate member and a fourth plate member pivotally connecting with the third plate member;
a first wall, the upper end thereof pivotally connecting with the first plate member and the lower end thereof pivotally connecting with the third plate member; and
a second wall, the upper end thereof pivotally connecting with the second plate member and the lower end thereof pivotally connecting with the fourth plate member;
wherein, the upper and lower ends of the first wall are joined to a first end of the upper cover and a first end of the lower cover and the upper and lower ends of the second wall are joined to a second end of the upper cover and a second end of the lower cover in case of the preceding parts being extended to allow the host unit case being set up completely.

2. The host unit case with foldable upper and lower covers for a computer as defined in claim 1 further comprises a third wall with a first end thereof being joined to the first wall and a second end thereof being joined to the second wall.

3. The host unit case with foldable upper and lower covers for a computer as defined in claim 2, wherein the first end of the third wall is pivotally connected to one of the first and second walls.

4. The host unit case with foldable upper and lower covers for a computer as defined in claim 3 further comprises an upper case member with a margin frame extending downward and the margin frame has fixing holes corresponding to fixing holes at the first wall and the second wall such that the upper case member is joined to the first wall and the second wall with screws passing through the corresponding fixing holes.

5. The host unit case with foldable upper and lower covers for a computer as defined in claim 3 further comprises a fourth wall with a first end thereof being joined to the first wall and a second end thereof being joined to the second wall.

6. The host unit case with foldable upper and lower covers for a computer as defined in claim 5, wherein the first end of the fourth wall pivotally connects with one of the first and second walls.

7. The host unit case with foldable upper and lower covers for a computer as defined in claim 6, wherein the first wall, the first plate member and the third plate member have a margin frame corresponding to each other respectively with pivotal holes at the margin frames corresponding to each other too such that the first wall pivotally connects with the first plate member and the third plate member with screw rods.

8. The host unit case with foldable upper and lower covers for a computer as defined in claim 7, wherein the second wall, the second plate member and the fourth plate member provide a margin frame respectively corresponding to each other with pivotal holes at the margin frames corresponding to each other too such that the second wall pivotally connects with the second and fourth plate members with screw rods passing through the corresponding pivotal holes.

9. The host unit case with foldable upper and lower covers for a computer as defined in claim 6, wherein the first end of the third wall and one of the first and second walls provide a corresponding margin frame respectively with corresponding pivotal holes at the margin frames such that the first end of the third wall pivotally connects with one of the first and second walls with a screw rod passing through the pivotal holes.

10. The host unit case with foldable upper and lower covers for a computer as defined in claim 9, wherein the first end of the fourth wall and one of the first and second walls provide a corresponding margin frame respectively with corresponding pivotal holes at the margin frames such that the first end of the fourth wall pivotally connects with one of the first and second walls with a screw rod passing through the pivotal holes.

11. The host unit case with foldable upper and lower covers for a computer as defined in claim 10, wherein the first wall and the second wall are a first lateral wall and a second lateral wall respectively and the third and fourth walls are a front wall and a rear wall respectively.

12. The host unit case with foldable upper and lower covers for a computer as defined in one of claims 1 further comprises a first support member with the upper end thereof being joined to the first wall and the lower end thereof being joined to the third plate member.

13. The host unit case with foldable upper and lower covers for a computer as defined in claim 12, wherein the upper and lower ends of the first support member has a horizontally bent shaped plate body respectively with the front and rear end of the respective plate body being pivotally connected to an end of a connecting rod and another end of the connecting rod pivotally joined to a lug for being attached to the third wall and the plate body at the lower end of the first support member has fixing holes corresponding to fixing holes at the third plate member such that the lower end of the first support member is joined to the third plate member with screws passing through the corresponding fixing holes.

14. The host unit case with foldable upper and lower covers for a computer as defined in claim 12 further comprises a second support member with the upper and lower ends thereof being joined to the first end of second wall such that a first electronic device is joined between the first wall and the second support member and a second electronic device is joined between the first and second support members.

15. The host unit case with foldable upper and lower covers for a computer as defined in claim 14, wherein the second support member has an elongated slot corresponding to fixing holes at the second wall such that the upper and lower ends of the second support member is joined to the second wall with screws passing through the corresponding elongated slot and the fixing holes and the elongated slot is available for adjusting distance between the second support member and the first wall.

16. The host unit case with foldable upper and lower covers for a computer as defined in claim 2, wherein the first wall, the first plate member and the third plate member have a margin frame corresponding to each other respectively with pivotal holes at the margin frames corresponding to each other too such that the first wall pivotally connects with the first plate member and the third plate member with screw rods.

17. The host unit case with foldable upper and lower covers for a computer as defined in claim 16, wherein the second wall, the second plate member and the fourth plate member provide a margin frame corresponding to each other respectively with pivotal holes at the margin frames corresponding to each other too such that the second wall pivotally connects with the second and fourth plate members with screw rods passing through the corresponding pivotal holes.

18. The host unit case with foldable upper and lower covers for a computer as defined in claim 17, wherein the third wall provides a margin frame with fixing holes corresponding to fixing holes at the first and second walls such that the third wall is joined to the first and second walls with screws passing through the fixing holes.

19. The host unit case with foldable upper and lower covers for a computer as defined in claim 18 further comprises a first support member with the top thereof being joined to the third wall and the bottom thereof being joined to the third plate member.

20. The host unit case with foldable upper and lower covers for a computer as defined in claim 19 further comprises a second support member with a first end thereof pivotally connecting with the first wall to allow the first end of the second support member contacting the first wall such that a first electronic device is joined between the third wall and the second support member and a second electronic device is joined between the first and second support members.
